# EUROPÄISCHE PATENTANMELDUNG

(11) **EP 1 363 139 A2**
(43) Veröffentlichungstag der Anmeldung: **19.11.2003**
(21) Anmeldenummer: 03010534.0
(22) Anmeldetag: 10.05.2003
(51) Int. Cl.: G01V 3/08

(54) **Vorrichtung zur Detektion von Metallgegenständen**

(30) Priorität: 14.05.2002 DE 10221549
(71) Anmelder: Maier & Fabris GmbH, 72072 Tübingen (DE)
(72) Erfinder: Maier, Hans J., 72072 Tübingen (DE); Fabris, Hans-Jürgen, 72760 Reutlingen (DE)
(74) Vertreter: Möbus, Daniela, Dr.-Ing.

(57) **Zusammenfassung**

Die vorliegende Anmeldung betrifft eine Vorrichtung zur Detektion von metallischen Gegenständen im Fuß- und Beinbereich von bei Personenkontrollen zu untersuchenden Personen, bei der ein oder mehrere Metalldetektoren (10, 12, 14, 16) am Boden, im Boden oder in Bodennähe so angeordnet sind, dass der Fuß- und Beinbereich jedes Beines getrennt erfasst werden kann.

## Beschreibung

Die Erfindung betrifft eine Vorrichtung zur Detektion von metallischen Gegenständen im Fuß- und Beinbereich von zu kontrollierenden Personen.

Schon seit längerer Zeit werden aus Sicherheitsgründen, beispielsweise auf Flughäfen oder bei Großveranstaltungen, wie z. B. Fußballspielen oder Popkonzerten, Personen vor dem Betreten des Flugzeugs oder am Eingang des Veranstaltungsgeländes auf metallische Gegenstände, wie Schusswaffen oder Messer, durchsucht.

Für diese Kontrollen gibt es verschiedene Vorrichtungen. Eine insbesondere auf Flughäfen bekannte Detektionsvorrichtung besteht aus einem "Türrahmen", durch den die zu kontrollierende Person hindurchgehen muss. Im Türrahmen sind Metalldetektoren angeordnet, die wenn die Person einen metallischen Gegenstand bei sich trägt, Alarm geben. Detektionsvorrichtungen dieser Art sind jedoch für die Kontrolle im unteren Beinbereich und im Bereich des Fußes und der Schuhe nur sehr eingeschränkt geeignet.

Für Kontrollen im unteren Beinbereich und dem Bereich des Fußes oder der Schuhe werden deswegen häufig zusätzlich im oder am Boden angeordnete Metalldetektoren, über die die zu kontrollierende Person hinweggehen muss, vorgesehen.

Nachteilig bei diesen Detektoren ist, dass sie auch dann Alarm geben, wenn gar kein zu detektierender Metallgegenstand im Bein- oder Schuhbereich vorhanden ist, sondern der Schuh selbst metallische Bestandteile, wie beispielsweise Haken, Schnallen, Metallverstärkungen oder Gelenkfedern aufweist.

Der Erfindung liegt daher die Aufgabe zugrunde, eine Vorrichtung zur Detektion von metallischen Gegenständen im Fuß- und Beinbereich von zu kontrollierenden Personen anzugeben, bei der ein sicheres Erkennen von zu detektierenden metallischen Gegenständen möglich ist und bei der gleichzeitig ein falscher Alarm aufgrund von metallischen Bestandteilen des Schuhs oder der Kleidung vermieden wird.

Die gestellte Aufgabe wird erfindungsgemäß durch die Vorrichtung zur Detektion metallischen Gegenständen, die die im Hauptanspruch aufgeführten Merkmale aufweist, gelöst. Die Unteransprüche geben bevorzugte Weiterbildungen an.

Bei der erfindungsgemäßen Vorrichtung zur Detektion metallischer Gegenstände im Fuß- und Beinbereich von zu kontrollierenden Personen wird der Fuß- und Beinbereich jedes Beines getrennt erfasst. Dazu sind entweder ein gemeinsamer Metalldetektor oder für jedes Bein getrennte Metalldetektoren vorgesehen, wobei die Signale für jedes Bein, beispielsweise über eine Anzeige- und Auswerteeinheit getrennt angezeigt werden. Eine Person, die die erfindungsgemäße Vorrichtung bedient, kann dann beispielsweise aus einer Anzeige, die für beide Beine unterschiedlich stark ausfällt, schließen, dass ein zu detektierender Metallgegenstand vorliegt. Fällt die Anzeige dagegen für beide Beine gleich groß aus, kann man annehmen, dass es sich beim Metallgegenstand um einen Bestandteil des Schuhs oder der Kleidung handelt.

Um diese Auswertung der getrennten Erfassung der Beine zu erleichtern, kann die Anzeige- und Auswerteeinheit so ausgelegt sein, dass sie selbsttätig die Differenz der Signale für die beiden Beine berechnet und anzeigt. In einer weiteren vorteilhaften Ausführungsform kann die Anzeige- und Auswerteeinheit so ausgelegt sein, dass sie zusätzlich auch noch die Absolutwerte und/oder die Summe der Signale für die beiden Beine berechnet. Überschreitet dieser Absolutwert oder der Summenwert eine normale Größe, so kann dann geschlossen werden, dass ein zu detektierender Metallgegenstand vorliegt.

Die Anzeigeeinrichtung kann außerdem auch eine Gewichtung der ermittelten Werte vornehmen und somit die Empfindlichkeit der Vorrichtung einstellen.

Die Anzeige- und Auswerteeinheit kann einen Speicher aufweisen, um die aufgenommenen Messwerte zu speichern und sie für diverse Berechnungen oder zur Archivierung zur Verfügung zu haben.

Bei der erfindungsgemäßen Detektionsvorrichtung können neben den eigentlichen Metalldetektoren zusätzliche Sensoren vorgesehen sein, mit denen erkennbar wird, wann eine zu untersuchende Person in die Detektionsvorrichtung eintritt und wann sie diese wieder verlässt. Damit kann man für die eigentliche Messung mit den Metalldetektoren einen definierten Zeitrahmen festlegen und somit Störungen besser ausblenden.

Die Anzeige- und Auswerteeinheit kann weiter voreingestellte Schwellwerte aufweisen, sodass sie, wenn ein Messwert oder die aus den Messwerten berechnete Summe oder Differenz den jeweiligen Schwellwert überschreitet, Alarm gibt. Es ist vorteilhaft, wenn die Schwellwerte einzeln von außen eingestellt werden können. Die passende Einstellung wird am Besten durch Versuche ermittelt. Es hat sich in der Praxis herausgestellt, dass es beispielsweise sinnvoll ist, den Schwellwert für die Differenz der Messwerte kleiner als den Schwellwert für den einzelnen Messwert festzulegen.

Die von der Anzeige- und Auswerteeinheit angezeigten Werte und der gegebenenfalls ausgelöste Alarm können in optischer und/oder akustischer Weise ausgegeben werden.

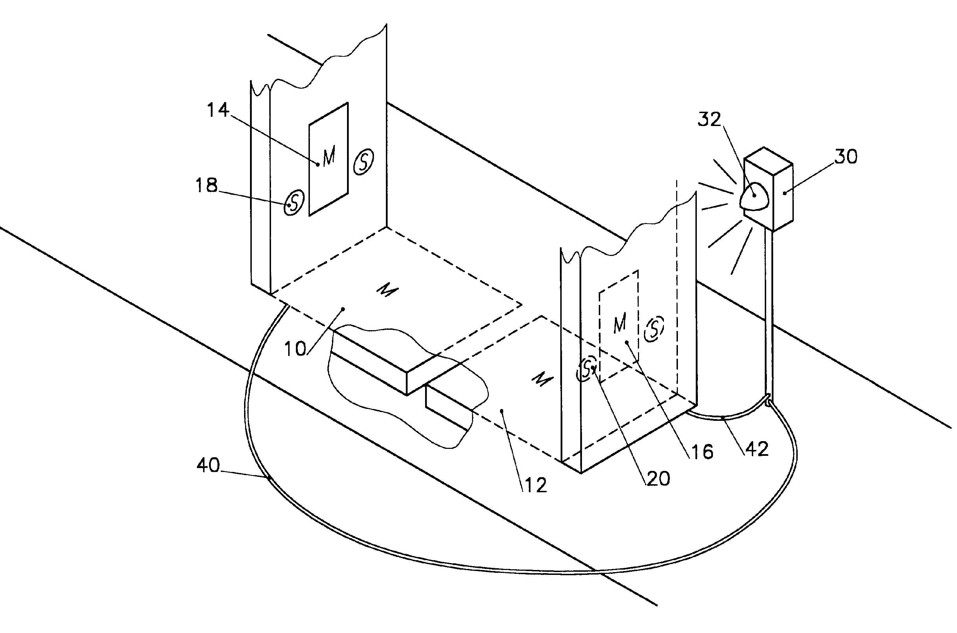

Ein Ausführungsbeispiel einer erfindungsgemäß ausgebildeten Vorrichtung zur Detektion von metallischen Gegenständen im Fuß- und Beinbereich von zu kontrollierenden Personen wird nachfolgend anhand der beiliegenden Zeichnung erläutert.

Die einzige Zeichnungsfigur zeigt ein Ausführungsbeispiel einer erfindungsgemäßen Detektionsvorrichtung. Wichtig ist, dass die Detektionsvorrichtung getrennte Metalldetektoren für jedes Bein aufweist. In der hier dargestellten Ausführungsform sind das zunächst einmal der linke Bodendetektor 10 für das linke Bein und der rechte Bodendetektor 12 für das rechte Bein. Weiter können, um das jeweilige Bein auch weiter oben kontrollieren zu können, ein oder mehrere linke Seitendetektoren 14 und ein oder mehrere rechte Seitendetektoren 16 vorgesehen sein. Die Metalldetektoren sind hier in der Zeichnung alle mit "M" gekennzeichnet.

Neben den Metalldetektoren können zusätzliche linke Sensoren 18 und rechte Sensoren 20, hier mit "S" gekennzeichnet, beispielsweise in Form einer Lichtschranke, vorgesehen sein. Diese dienen dazu, einen definierten Anfangs- und Endpunkt des Messverfahrens zu bilden.

Die hier dargestellte Ausführungsform der erfindungsgemäßen Detektionsvorrichtung umfasst ferner eine Anzeige- und Auswerteeinheit 30, die die von den Detektoren 10, 12, 14, 16 aufgenommenen Messwerte anzeigt und aus diesen gegebenenfalls die Differenz und/oder die Summe bildet. Damit eine getrennte Anzeige für jedes Bein erfolgen kann, sind die Detektoren 10, 14 und gegebenenfalls die Sensoren 18 der linken Seite über ein eigenes Kabel 40 und die entsprechenden Detektoren 12, 16 und gegebenenfalls die Sensoren 20 der rechten Seite über ein getrenntes eigenes Kabel 42 mit der Anzeige- und Auswerteeinheit 30 verbunden.

Die Anzeige- und Auswerteeinheit kann verschiedene optische und/oder akustische Anzeigemöglichkeiten bieten, die hier nur schematisch durch eine Warnlampe 32 dargestellt sind.

### Bezugszeichenliste:

- 10: linker Bodendetektor
- 12: rechter Bodendetektor
- 14: linker Seitendetektor
- 16: rechter Seitendetektor
- 18: linker Sensor
- 20: rechter Sensor

- 30: Anzeige- und Auswerteeinheit
- 32: Warnlampe

- 40: linkes Kabel
- 42: rechtes Kabel

## Patentansprüche

1. Vorrichtung zur Detektion von metallischen Gegenständen im Fuß- und Beinbereich von bei Personenkontrollen zu untersuchenden Personen, **dadurch gekennzeichnet, dass** ein oder mehrere Metalldetektoren (10, 12, 14, 16) im oder am Boden oder in Bodennähe so angeordnet sind, dass der Fuß- und Beinbereich jedes Beines getrennt erfasst werden kann.

2. Vorrichtung nach Anspruch 1, **dadurch gekennzeichnet, dass** die Metalldetektoren (10, 12, 14, 16) mit einer Anzeigeund Auswerteeinheit (30) verbunden sind, wobei die Anzeige- und Auswerteeinheit (30) die von den Metalldetektoren gemessenen Werte für jedes Bein getrennt anzeigt.

3. Vorrichtung nach Anspruch 2, **dadurch gekennzeichnet, dass** die Anzeige- und Auswerteeinheit (30) die Differenz aus den Werten, die für beide Beine gemessen werden, berechnet und anzeigt.

4. Vorrichtung nach Anspruch 2 oder 3, **dadurch gekennzeichnet, dass** die Anzeige- und Auswerteeinheit (30) den Absolutwert und/oder die Summe aus den Werten, die für beide Beine gemessen werden, berechnet und anzeigt.

5. Vorrichtung nach Anspruch 3 oder 4, **dadurch gekennzeichnet, dass** die Anzeige- und Auswerteeinheit (30) eine Gewichtung der Differenz, des Absolutwerts und/oder der Summe der Messsignale der beiden Beine vornimmt.

6. Vorrichtung nach Anspruch 2, 3, 4 oder 5, **dadurch gekennzeichnet, dass** die Anzeige- und Auswerteeinheit (30) einen Speicher zum Speichern der gemessenen und der berechneten Werte aufweist.

7. Vorrichtung nach einem der vorhergehenden Ansprüche, **dadurch gekennzeichnet, dass** zusätzlich zu den Metalldetektoren (10, 12, 14, 16) Sensoren (18, 20) vorgesehen sind, die erkennen, wann das Bein oder der Fuß der zu untersuchenden Person in den Bereich der Metalldetektoren gelangt bzw. diesen wieder verlässt.

8. Vorrichtung nach einem der vorhergehenden Ansprüche, **dadurch gekennzeichnet, dass** die Anzeige- und Auswerteeinheit (30) bei Überschreiten von Schwellwerten einen Alarm auslöst.

9. Vorrichtung nach Anspruch 8, **dadurch gekennzeichnet, dass** die Anzeige- und Auswerteeinheit (30) eine Vorrichtung zum Einstellen der Schwellwerte von außen umfasst.

10. Vorrichtung nach einem der vorhergehenden Ansprüche, **dadurch gekennzeichnet, dass** die Werte und der Alarm von der Anzeige- und Auswerteeinheit (30) in optischer und/oder akustischer Weise angezeigt werden.
